# EUROPEAN PATENT APPLICATION

(11) **EP 2 757 677 A2**
(43) Date of publication of application: **23.07.2014**
(21) Application number: 13275313.8
(22) Date of filing: 13.12.2013
(51) Int. Cl.: H02M 7/483

(54) **Multilevel inverter**

(30) Priority: 16.01.2013 KR 20130004729
(71) Applicant: Samsung Electro-Mechanics Co., Ltd, Suwon, Gyunggi-Do (KR); Industry Foundation Of Chonnam National University, Buk-gu Gwangju-city (KR)
(72) Inventor: Heo, Min Ho, Gyunggi-do (KR); Lee, Tae Won, Gyunggi-do (KR); Park, Sung Jun, Gwangju (KR); Kim, Tae Hoon, Gyunggi-do (KR); Choi, Kwang Soo, Gyunggi-do (KR)
(74) Representative: Powell, Timothy John

(57) **Abstract**

There is provided a multilevel inverter (100) capable of easily perform balancing of voltages (DC_UP,DC_DOWN) by way of controlling switching of voltage dividing based on an offset between voltages divided by capacitors (C1, C2) of a voltage dividing circuit (110). The multilevel inverter (100) includes: a voltage dividing unit (110) including a plurality of capacitors (DC1, DC2) for dividing an input direct current (DC) voltage; an inverter unit (120) switching the divided DC voltages to output a predetermined alternating current (AC) voltage; and a control unit (130) providing a control signal (S1, S2) for controlling switching of the inverter unit (120) based on an offset between the voltages divided by the plurality of capacitors (C1, C2).

## Description

### CROSS-REFERENCE TO RELATED APPLICATION

This application claims the benefit of Korean Patent Application No. 10-2013-0004729 filed on January 16, 2013, with the Korean Intellectual Property Office, the disclosure of which is incorporated herein by reference.

### BACKGROUND

The present disclosure relates to a multilevel inverter that facilitates balancing in the dividing of an input voltage.

An inverter is a circuit that receives a direct current (DC) voltage to output an alternating current (AC) signal and is able to control the amplitude, frequency and harmonic component of the AC signal. In general, inverters may be divided into two-level and three-level inverters, according to the level (amplitude) of the output AC signal and may include a circuit to divide an input DC voltage into the necessary number of levels, and a switching circuit to generate an AC output signal from the input DC voltage divided into the necessary number of levels.

In general, in a common two-level or three-level inverter, a circuit that divides an input DC voltage into three levels may include capacitors having the same capacitance. The switching circuit may include a plurality of switching elements in which transistors and diodes are connected to one another. In particular, a typical inverter circuit has a switching element capable of bi-directional switching connected to a center tap of a voltage dividing circuit so as to provide paths necessary for outputting signals according to operation modes.

As disclosed in the Related Art Document, in a typical inverter circuit, since an offset voltage is generated in balancing voltages applied to the capacitors of the voltage dividing unit, resistors, diodes or switches are employed for suppressing such an offset voltage and maintaining balance in voltages. However, there may be problems in that current consumption may be increased and accuracy may be lowered.

### [Related Art Document]

(Patent Document 1) Korean Patent Laid-open Publication No. 1998-0020600

### SUMMARY

An aspect of the present disclosure may provide a multilevel inverter capable of easily balancing voltages by way of controlling switching of voltage dividing based on an offset between voltages divided by capacitors in a voltage dividing circuit.

According to an aspect of the present disclosure, a multilevel inverter may include: a voltage dividing unit including a plurality of capacitors for dividing an input direct current (DC) voltage; an inverter unit switching the divided DC voltages to output a predetermined alternating current (AC) voltage; and a control unit providing a control signal for controlling switching of the inverter unit based on an offset between the voltages divided by the plurality of capacitors.

The control unit may include: an offset detection unit detecting the offset between the voltages divided by the plurality of capacitors; a modulation unit modifying a predetermined modulation signal according to the offset voltage detected by the offset detection unit; and a signal generation unit generating the control signal according to the modulation signal from the modulation unit and a predetermined carrier signal.

The offset detection unit may include: a comparator comparing voltage levels of the divided voltages with one another; a stabilizer stabilizing a comparison result signal from the comparator; and a limiter limiting a level of a signal from the stabilizer.

The control unit may repeat a loop of offset detection, modulation, and signal generation until the offset between the divided voltages is removed.

The voltage dividing unit may include at least two capacitors connected in series between input DC voltage terminals to which the input DC voltage is applied.

The inverter unit may include: a first voltage switch and a second voltage switch connected to the at least two capacitors in parallel and stacked on one another.

According to another aspect of the present disclosure, a multilevel inverter may include: a voltage dividing unit including a plurality of capacitors for dividing an input DC voltage; an inverter unit having three inverter arms and switching the divided DC voltages to output a three-phase AC voltage; and a control unit providing a control signal for controlling switching of the three inverter arms of the inverter unit based on an offset between the voltages divided by the plurality of capacitors.

Each of the three inverter arms may include: a first voltage switch and a second voltage switch connected to the at least two capacitors in parallel and stacked on one another.

### BRIEF DESCRIPTION OF DRAWINGS

The above and other aspects, features and other advantages of the present disclosure will be more clearly understood from the following detailed description taken in conjunction with the accompanying drawings, in which:
FIG. 1 is a schematic circuit diagram of a multilevel inverter according to an exemplary embodiment of the present disclosure;
FIGS. 2A, 2B and 2C are schematic circuit diagrams of the control unit employed in a multilevel inverter according to an exemplary embodiment of the present disclosure;
FIG. 3A is a graph of divided voltages of an existing multilevel inverter; FIG. 3B is a graph of voltages in major portions of the control unit employed in a multilevel inverter according to an exemplary embodiment of the present disclosure; and FIG. 3C is a graph of divided voltages of the multilevel inverter according to an exemplary embodiment of the present disclosure; and
FIG. 4 is a schematic circuit diagram of a multilevel inverter according to another exemplary embodiment of the present disclosure.

### DETAILED DESCRIPTION

Hereinafter, embodiments of the present invention will be described in detail with reference to the accompanying drawings. The invention may, however, be embodied in many different forms and should not be construed as being limited to the embodiments set forth herein. Rather, these embodiments are provided so that this disclosure will be thorough and complete, and will fully convey the scope of the invention to those skilled in the art. Throughout the drawings, the same or like reference numerals will be used to designate the same or like elements.

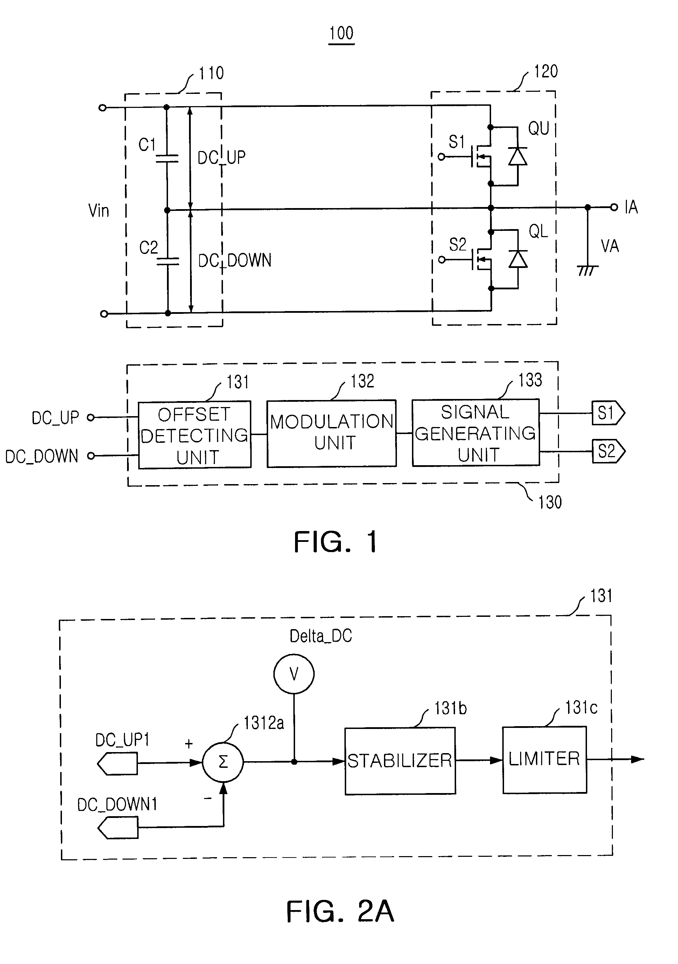

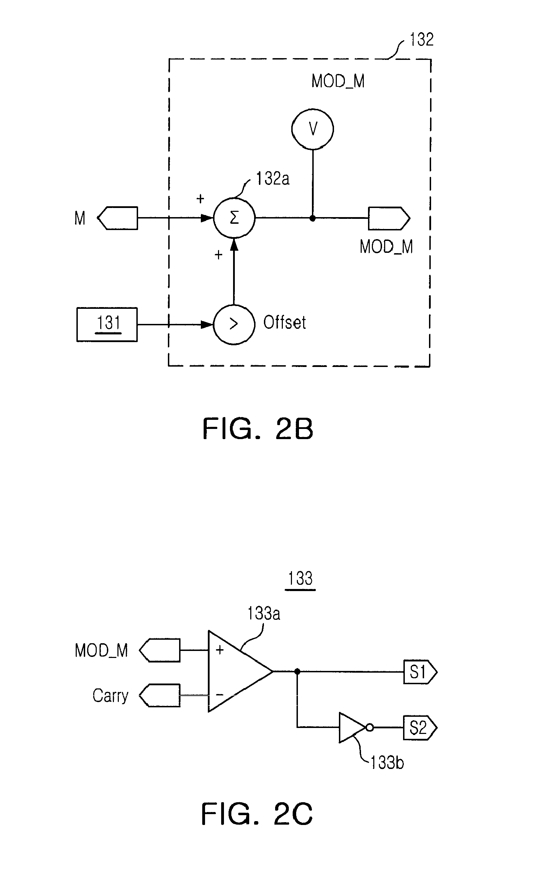

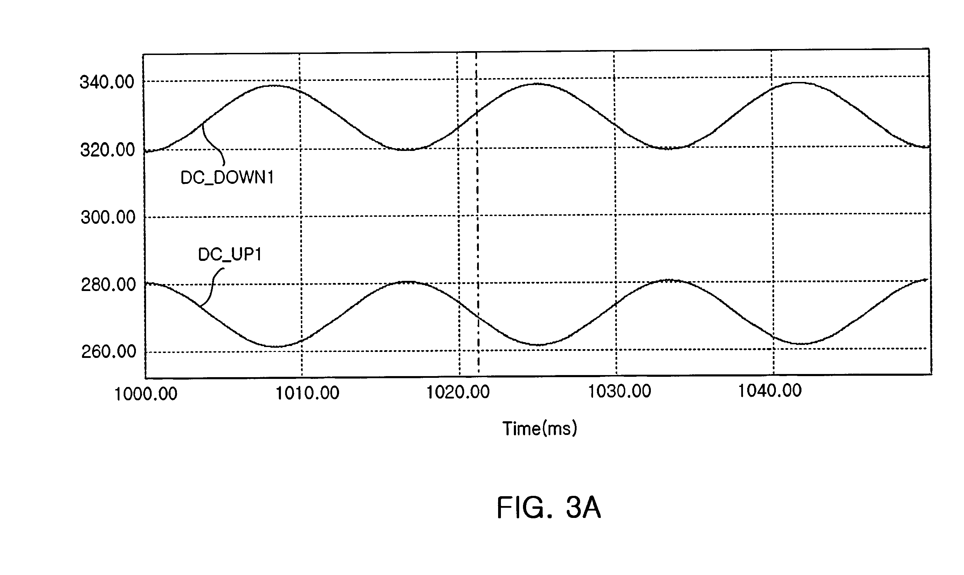

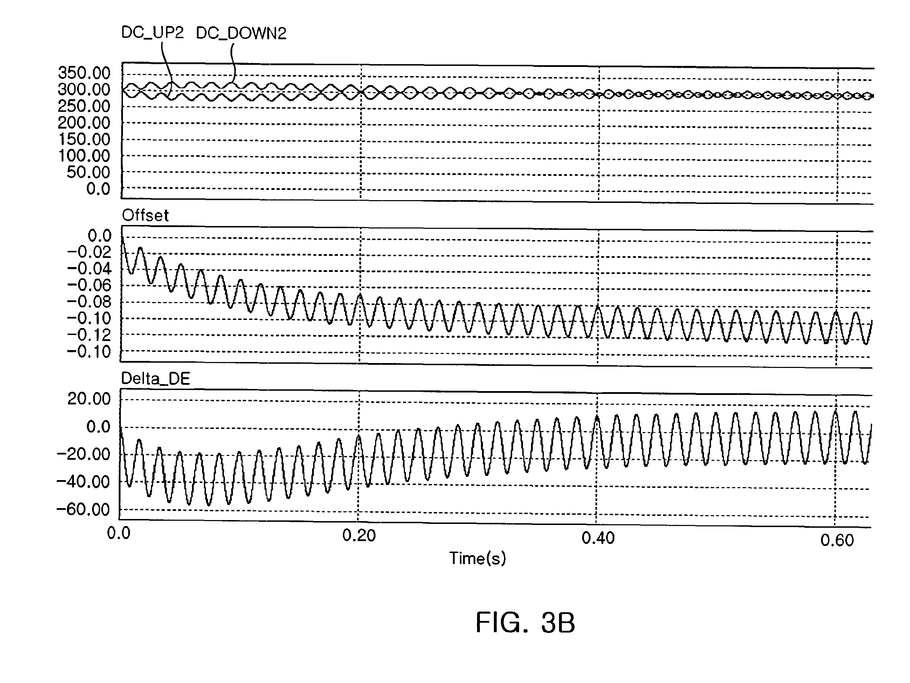

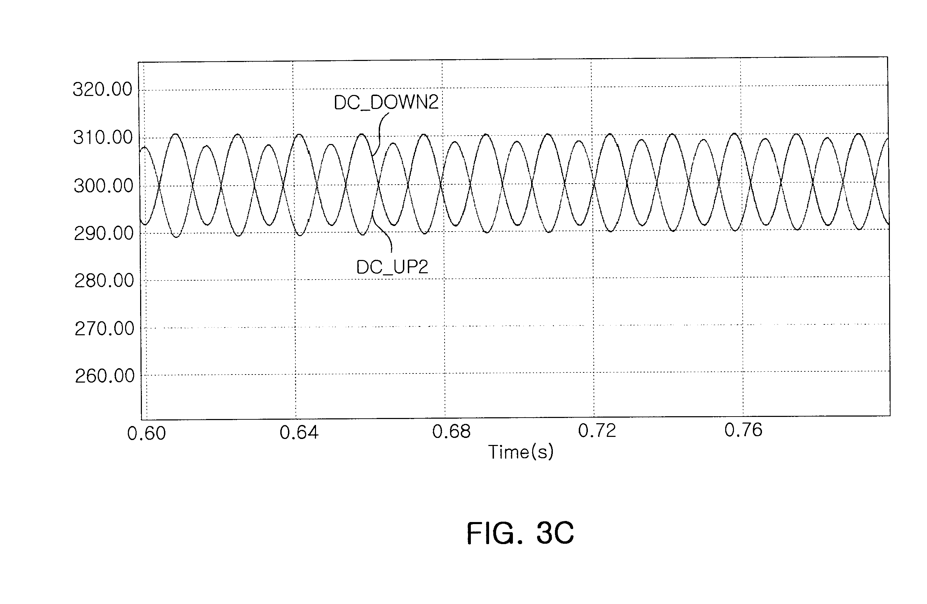

FIG. 1 is a schematic circuit diagram of a multilevel inverter according to an exemplary embodiment of the present disclosure; FIGS. 2A, 2B and 2C are schematic circuit diagrams of the control unit employed in a multilevel inverter according to an exemplary embodiment of the present disclosure; FIG. 3A is a graph of divided voltages of an existing multilevel inverter; FIG. 3B is a graph of voltages in major portions of the control unit employed in a multilevel inverter according to an exemplary embodiment of the present disclosure; and FIG. 3C is a graph of divided voltages of the multilevel inverter according to an exemplary embodiment of the present disclosure.

Referring to FIG. 1, the multilevel inverter 100 according to the exemplary embodiment of the present disclosure may include a voltage dividing unit 110, an inverter unit 120, and a control unit 130.

The voltage dividing unit 110 may receive an input direct current (DC) voltage Vᵢₙ to be divided into DC voltages of a predetermined number of levels. To this end, a plurality of capacitors may include two capacitors C1 and C2 connected in series between input DC voltage terminals to which the input DC voltage Vin is applied. Although not shown, in the case of a three-level multi inverter, three capacitors may be connected in series between the input DC voltage terminals so that the input DC voltage Vin is divided into three DC voltages.

The inverter unit 120 may switch the DC voltages divided by the voltage dividing unit 110 to produce alternating current (AC) output signals IA and VA.

To this end, the inverter unit 120 may include a plurality of voltage switches QU and QL.

The first and second voltage switches QU and QL may be connected to the voltage dividing unit 110 in parallel and may be stacked on one another between the input DC voltage terminals. The first voltage switch QU and the second voltage switch QL may switch divided DC voltages DC_UP and DC_DOMN, respectively, according to a switching control signal to produce an AC voltage. As shown in FIG. 3A, if 600V is divided into the DC voltages DC_UP1 and DC_DOWN1, they may be approximately 330V and 270V, instead of both accurately being 300V, due to offset voltage.

Accordingly, the control unit 130 may produce the switching control signal for controlling switching between the first voltage switch QU and the second voltage switch QL according to the offset voltage in the divided DC voltages DC_UP and DC_DOWN.

The control unit 130 may include an offset detection unit 131, a modulation unit 132, and a signal generation unit 133.

The offset detection unit 131 may detect an offset voltage between the divided DC voltages DC_UP1 and DC_DOWN1. The modulation unit 132 may produce a modulation signal according to the detected offset voltage. The signal generation unit 133 may use the modulation signal from the modulation unit 132 and a predetermined carrier signal to produce the switching control signal for controlling the switching between the first voltage switch QU and the second voltage switch QL.

Referring to FIG. 2A, the offset detection unit 131 may include a comparator 131a, a stabilizer 131b, and a limiter 131c.

The comparator 131a may detect a difference between the divided DC voltages DC_UP1 and DC_DOWN1. The stabilizer 131b may stabilize a detected result. The limiter 131c may limit the level of a stabilized signal to a processible signal level.

Referring to FIG. 3B, difference Delta_DC between the DC voltages DC_UP1 and DC_DOWN1 divided by the comparator 131a and the offset voltage Offset between the divided DC voltages DC_UP and DC_DOMN and is shown. That is, as the control unit 130 repeats offset correction operations, a difference Delta_DC between the DC voltages DC_UP1 and DC_DOWN1 divided by the comparator 131a and the offset voltage Offset between the divided DC voltages DC_UP and DC_DOWN decreases. Therefore, as the offset correction operations are repeated, offset voltages in the voltage levels of the divided DC voltages DC_UP2 and DC_DOWN2 are removed, and the voltage levels are evenly divided.

Referring to FIG. 2B, the modulation unit 132 may add an offset voltage Offset to a predetermined modulation signal M to produce a modified modulation signal MOD_M. Referring to FIG. 2C, the signal generation unit 133 may compare the modified modulation signal MOD_M with a carrier signal to provide a switching control signal.

The signal waveforms of the major parts in this case are illustrated in FIG. 3B. The first voltage switch QU and the second voltage switch QL maintain balance between the capacitors C1 and C2 according to the switching control signal, as shown in FIG. 3C.

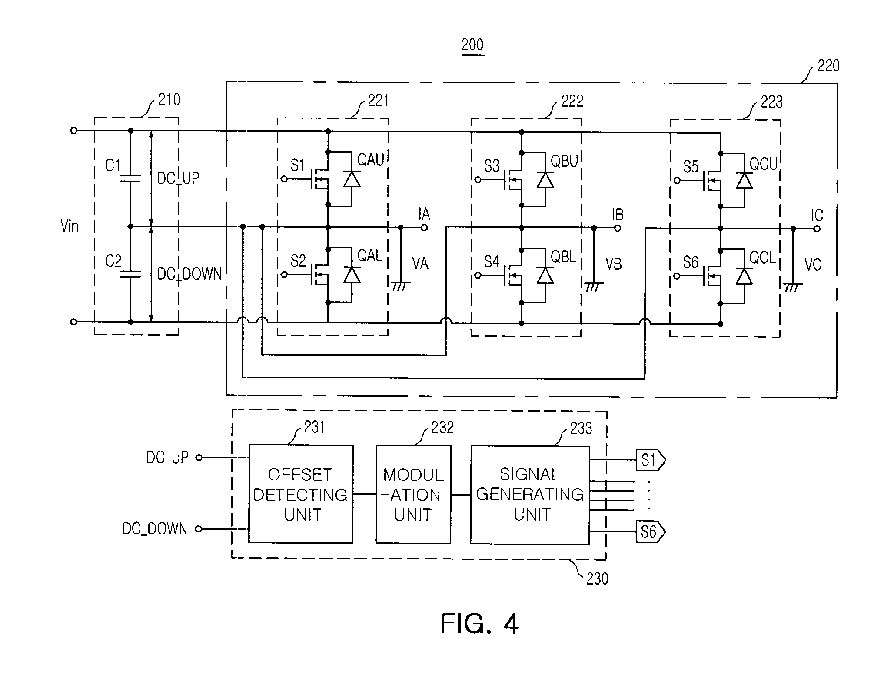

FIG. 4 is a schematic circuit diagram of a multilevel inverter according to another exemplary embodiment of the present disclosure.

Referring to FIG. 4, the multilevel inverter 200 according to another exemplary embodiment may provide a three-phase AC voltage. To this end, the inverter unit 220 may include first to third inverter arms 221, 222 and 223 for outputting three-phase AC signals IA, VA, IB, VB, IC and VC.

The first inverter arm 221 may be stacked between the input DC voltage terminals with the first and second voltage switches QAU and QAL connected to a voltage dividing unit 210 such that it may switch the divided DC voltages according to the switching control signal from the control unit 230.

Likewise, the second and third inverter arms 222 and 223 may be stacked between the input DC voltage terminals with the third and fourth voltage switches QBU and QBL and the fifth and sixth voltage switches QCU and QCL connected to the voltage dividing unit 210, respectively, such that they may switch the divided DC voltages according to the switching control signal from the control unit 230.

Other elements such as the voltage dividing unit 210 and a control unit 230 including an offset detection unit 231, a modulation unit 232, and a signal generation unit 233 are substantially identical to the inverter unit 110 and the control unit 130 in the exemplary embodiment 100 illustrated in FIG. 1, the description thereon will not be made again. The signal generation unit 233 of the control unit 230, however, is different from the signal generation unit 233 in that it provides switching control signals for controlling the voltage switches of the first to third arms 221, 222 and 223 of the inverter unit 220.

As set forth above, according to exemplary embodiments of the present disclosure, switching of voltage dividing is controlled based on the offset between voltages divided by the capacitors in a voltage dividing circuit, so that balancing of voltages divided by the capacitors in the voltage dividing circuit may be easily carried out. Further, no additional circuit is necessary in the voltage dividing circuit for balancing voltages and thus power consumption can be saved.

While exemplary embodiments have been shown and described above, it will be apparent to those skilled in the art that modifications and variations could be made without departing from the spirit and scope of the present disclosure as defined by the appended claims.

## Claims

1. A multilevel inverter, comprising:
a voltage dividing unit including a plurality of capacitors for dividing an input direct current (DC) voltage;
an inverter unit switching the divided DC voltages to output a predetermined alternating current (AC) voltage; and
a control unit providing a control signal for controlling switching of the inverter unit based on an offset between the voltages divided by the plurality of capacitors.

2. The multilevel inverter of claim 1, wherein the control unit includes:
an offset detection unit detecting the offset between the voltages divided by the plurality of capacitors;
a modulation unit modifying a predetermined modulation signal according to the offset voltage detected by the offset detection unit; and
a signal generation unit generating the control signal according to the modulation signal from the modulation unit and a predetermined carrier signal.

3. The multilevel inverter of claim 2, wherein the offset detection unit includes: a comparator comparing voltage levels of the divided voltages with one another; a stabilizer stabilizing a comparison result signal from the comparator; and a limiter limiting a level of a signal from the stabilizer.

4. The multilevel inverter of claim 2, wherein the control unit repeats a loop of offset detection, modulation, and signal generation until the offset between the divided voltages is removed.

5. The multilevel inverter of claim 1, wherein the voltage dividing unit includes at least two capacitors connected in series between input DC voltage terminals to which the input DC voltage is applied.

6. The multilevel inverter of claim 3, wherein the inverter unit includes: a first voltage switch and a second voltage switch connected to the at least two capacitors in parallel and stacked on one another.

7. A multilevel inverter, comprising:
a voltage dividing unit including a plurality of capacitors for dividing an input DC voltage;
an inverter unit having three inverter arms and switching the divided DC voltages to output a three-phase AC voltage; and
a control unit providing a control signal for controlling switching of the three inverter arms of the inverter unit based on an offset between the voltages divided by the plurality of capacitors.

8. The multilevel inverter of claim 7, wherein the control unit includes:
an offset detection unit detecting the offset between the voltages divided by the plurality of capacitors;
a modulation unit modifying a predetermined modulation signal according to the offset voltage detected by the offset detection unit; and
a signal generation unit generating the control signal according to the modulation signal from the modulation unit and a predetermined carrier signal.

9. The multilevel inverter of claim 8, wherein the offset detection unit includes:
a comparator comparing voltage levels of the divided voltages with one another;
a stabilizer stabilizing a comparison result signal from the comparator; and
a limiter limiting a level of a signal from the stabilizer.

10. The multilevel inverter of claim 8, wherein the control unit repeats a loop of offset detection, modulation, and signal generation until the offset between the divided voltages is removed.

11. The multilevel inverter of claim 7, wherein the voltage dividing unit includes at least two capacitors connected in series between input DC voltage terminals to which the input DC voltage is applied.

12. The multilevel inverter of claim 3, wherein each of the three invert arms includes: a first voltage switch and a second voltage switch connected to the at least two capacitor in parallel and stacked on one another.
